# EUROPEAN PATENT APPLICATION

(11) **EP 4 485 373 A1**
(43) Date of publication of application: **01.01.2025**
(21) Application number: 24175305.2
(22) Date of filing: 10.05.2024
(51) Int. Cl.: G06V 10/75, G06T 7/73, G06V 10/82, G06V 20/64, G06V 40/20

(54) **3D POSE DETERMINATION BY USE OF NEURAL NETWORK**

(30) Priority: 27.06.2023 SE 2350795
(71) Applicant: Sony Group Corporation, Tokyo 108-0075 (JP)
(72) Inventor: HUANG, Sangxia, Basingstoke, RG22 4SB (GB)
(74) Representative: Neij & Lindberg AB

(57) **Abstract**

An apparatus is configured to perform a method of determining a current 3D pose of an object in a scene based on 2D poses in views detected by cameras in a multi-camera system. The method involves obtaining (401) a 3D pose for the object at a preceding time, and obtaining (402) a plurality of 2D poses for the object at a current time. The method further involves operating (403) a trained neural network on the 3D pose and pose data representative of the plurality of 2D poses to generate 3D adjustment data. The method determines (404) the current 3D pose of the current time by adjusting the 3D pose by the 3D adjustment data. The use of a trained neural network will provide robustness and enable a small computational footprint.

## Description

### Technical Field

The present disclosure relates generally to computer vision and, in particular, to determination of 3D poses of one or more objects in a scene based on detected 2D poses of the object(s) in two or more views of the scene.

### Background Art

Image-based positioning systems that operate on image data from digital cameras are used in many commercial applications and are capable of achieving high accuracy at reasonable cost. In such systems, a plurality of digital cameras may be set up to view a scene from different angles, and the video streams from the digital cameras may be processed for object detection and tracking.

During operation, the image-based positioning system may perform a detection step for detecting keypoints ("image points") of objects in the video streams at a given time. The detection step results in 2D poses for the objects that are visible in the respective camera view at the given time. Each 2D pose may be given by keypoint locations in an image. Further, an association step may be performed to associate 2D poses between the camera views, and a positioning step may be performed to calculate a 3D pose, comprising 3D positions in the scene, based on the associated 2D poses. In one implementation, the positioning step involves triangulation of keypoint locations of associated 2D poses into 3D positions of a 3D pose. Further, by use of the video streams, a time sequence of 3D poses for an object may be calculated.

One challenge of 3D pose determination is that the detection of keypoints in images in video streams are often afflicted by inaccuracies, or "observation errors", for example caused by disturbances in the images such as noise or occlusion, or aggravating circumstances such as bad lighting, unusual poses, etc. The observation errors typically lead to inaccuracies in the keypoint locations, resulting in error and jitter in the calculated 3D positions of the 3D poses. The inaccuracies may be large enough to obstruct downstream analysis of the 3D poses.

One class of triangulation techniques use heuristics to remove uncertain keypoints to improve the quality of the calculated 3D positions. Another class of triangulation techniques apply post-processing to filter the calculated 3D poses based on smoothness and prior knowledge of the object structure. However, heuristics and filtering increase processing time. Further, any type of triangulation for 3D pose determination requires keypoint detection to be sufficiently accurate in images from at least two camera views. To ensure redundancy, for example to cope with occlusions when there are many objects in the scene, the number of cameras may need to be considerable.

### Brief Summary

It is an objective to at least partly overcome one or more limitations of the prior art.

Another objective is to provide a technique for 3D pose determination based on a plurality of 2D poses.

Yet another objective is to provide such a technique that is robust to observation errors in the 2D poses.

A further objective is to provide such a technique with small computational footprint.

One or more of these objectives, as well as further objectives that may appear from the description below, are at least partly achieved by a computer-implemented method of determining a current 3D pose of an object in a scene, a computer-readable medium, and an apparatus according to the independent claims, embodiments thereof being defined by the dependent claims.

Still other objectives, as well as features, aspects and technical effects will appear from the following detailed description, from the attached claims as well as from the drawings.

### Brief Description of Drawings

FIG. 1A is a perspective view of an installation of a monitoring system in a room, FIG. 1B exemplifies object detection data (ODD) generated in the system, FIG. 1C exemplifies keypoints detected for a human object, and FIG. 1D illustrates a view of one of the cameras in the system onto the scene.
FIG. 2 illustrates position determination by triangulation based on detected keypoints in three views.
FIG. 3 is a conceptual view of a 3D pose determination by use of a neural network in accordance with embodiments.
FIG. 4 is a flow chart of an example method for 3D pose determination in accordance with embodiments.
FIG. 5 is a flow chart of an example method for 3D pose determination by sequential processing of 2D poses from different views.
FIG. 6 is a flow chart of an example procedure for calculating a pose data item for a 2D pose in accordance with embodiments.
FIGS 7A-7C are graphical illustrations of calculations that may be performed as part of the methods in FIGS 4-6.
FIG. 8 is a flow chart of an example composite method for 3D pose determination in accordance with embodiments.
FIGS 9A-9B are block diagrams of example systems for 3D pose determination in accordance with embodiments.
FIG. 10A is a block diagram of an example system for training a neural network for use in 3D pose determination, and FIGS 10B-10C illustrate example calculations performed in a system for neural network training.
FIG. 11 is a block diagram of a machine that may implement any method or procedure as disclosed herein.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

As used herein, the terms "multiple", "plural" and "plurality" are intended to imply provision of two or more elements. The term "and/or" includes any and all combinations of one or more of the associated listed elements.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

While operations are depicted in the drawings in a particular order, this should not be understood as requiring that such operations be performed in the particular order shown or in sequential order, or that all illustrated operations be performed, to achieve desirable results.

Like numbers refer to like elements throughout.

Before describing embodiments in more detail, a few definitions will be given.

As used herein, "object" denotes any animate or inanimate object that may be represented by a set of keypoints in an image. Examples of animate objects include human individuals and animals. Examples of inanimate objects include any object that may change its pose over time, for example an articulated object such as an industrial robot, construction vehicle, etc.

As used herein, "scene" denotes a three-dimensional (3D) space that is collectively monitored by cameras, which have at least partly overlapping fields of views.

As used herein, "camera" is an imaging device configured to generate images of a scene by detection of electromagnetic waves and/or mechanical waves that are generated and/or reflected by the scene and objects therein. The camera may be responsive to electromagnetic waves in any wavelength range, including but not limited to ultraviolet, visible or infrared radiation, or any part or combination thereof. The camera is configured to produce a video stream, i.e. a coherent time sequence of images. The respective image is a two-dimensional (2D) representation of the scene, or part thereof, as seen by the camera. The image is typically a digital image.

As used herein, "view" or "camera view" refers to the part of the scene that is included within the field of view of a camera and is reproduced in the image plane of the camera.

As used herein, "field of view" has its conventional meaning and denotes the extent of the scene that is observed by the respective camera at any given moment and may be defined as a solid angle through which the camera is sensitive to the electromagnetic/mechanical waves.

As used herein, "keypoint" has its conventional meaning in the field of computer vision and is also known as an interest point. A keypoint is a spatial location or point in an image that defines what is interesting or what stand out in the image and may be defined to be invariant to image rotation, shrinkage, translation, distortion, etc. More generally, a keypoint may be denoted a "feature point" on an object to be detected in the image, with the feature point having a predefined placement on the object. Keypoints may be defined for a specific type of object, for example a human body, a part of the human body, or an inanimate object with a known structure or configuration. In the example of a human body, keypoints may identify one or more joints and/or extremities. Keypoints may be detected by use of any existing feature detection algorithm(s), for example image processing techniques that are operable to detect one or more of edges, corners, blobs, ridges, etc. in digital images. Non-limiting examples of feature detection algorithms comprise SIFT (Scale-Invariant Feature Transform), SURF (Speeded Up Robust Feature), FAST (Features from Accelerated Segment Test), SUSAN (Smallest Univalue Segment Assimilating Nucleus), Harris affine region detector, and ORB (Oriented FAST and Rotated BRIEF). Further information about conventional keypoint detectors is found in the article "Local invariant feature detectors: a survey", by Tuytelaars et al, published in Found. Trends. Comput. Graph. Vis. 3(3), 177-280 (2007). Further examples of feature detection algorithms are found in the articles "Simple Baselines for Human Pose Estimation and Tracking", by Xiao et al, published at ECCV 2018, and "Deep High-Resolution Representation Learning for Human Pose Estimation", by Sun et al, published at CVPR 2019. Correspondingly, objects may be detected in images by use of any existing object detection algorithm(s). Non-limiting examples include various machine learning-based approaches or deep learning-based approaches, such as Viola-Jones object detection framework, SIFT, HOG (Histogram of Oriented Gradients), Region Proposals (RCNN, Fast-RCNN, Faster-RCNN), SSD (Single Shot MultiBox Detector), You Only Look Once (YOLO, YOLO9000, YOLOv3), and RefineDet (Single-Shot Refinement Neural Network for Object Detection).

As used herein, "scene point" is any point in a scene that is included and detectable as a keypoint in two or more camera views. The scene point has a three-dimensional (3D) location in a common coordinate system.

As used herein, "common coordinate system" and "scene coordinate system" refer to a reference system that uniquely defines the 3D location of a scene point in relation to an origin.

As used herein, "pose" refers to a data set that defines the posture of an object. A "2D pose" represents the posture of the object in a view and is given by a collection of keypoints in the view. A "3D pose" represent the posture of the object in a scene and is given by a collection of scene points.

As used herein, "calibration data" refers to one or more parameters that at least define the positions and orientations of the cameras monitoring the scene. The calibration data may also include inner ("intrinsic") parameters for the respective camera. In some embodiments, the calibration data may be seen to describe a transformation from scene coordinates (3D) to image coordinates (2D). The calibration data may be relative or absolute. In some embodiments, the calibration data comprises a so-called camera projection matrix ("camera matrix") for the respective camera, which may or may not comprise the intrinsic parameters of the respective camera. In some embodiments, the camera matrix for a camera i is defined as ***Pᵢ*** = ***Kᵢ***[***Rᵢ Tᵢ***], with ***Kᵢ*** being the intrinsic matrix of the camera, ***Rᵢ*** being a rotation matrix, and ***Tᵢ*** being a translation vector.

Embodiments relate to 3D pose determination based on image data from a multi-camera system, which includes two or more cameras. The following description will be given for objects in the form of human individuals, but the disclosure may be applied to any type of object, be it animate or inanimate.

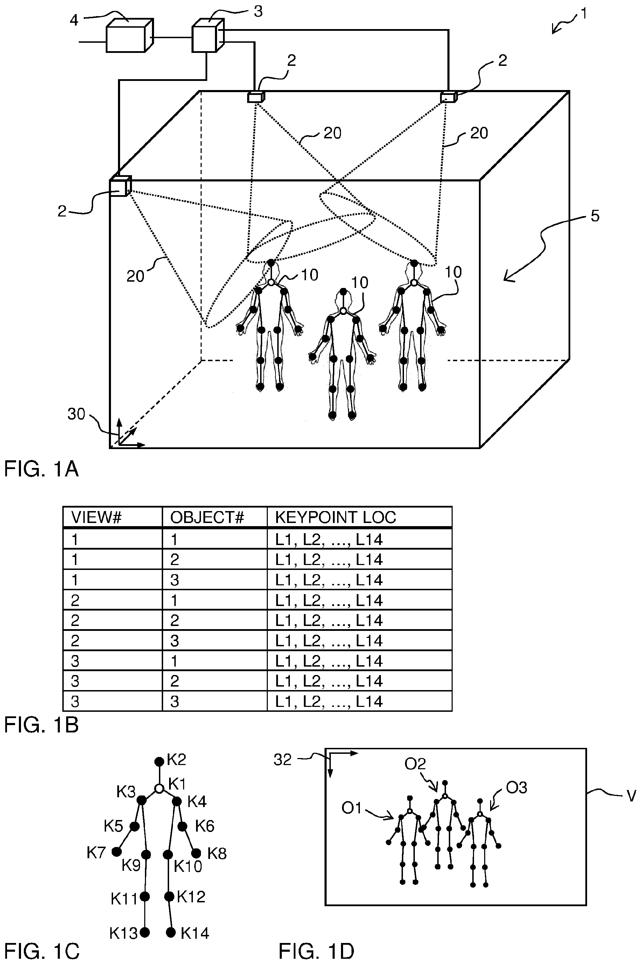

FIG. 1A shows an example multi-camera system 1, also denoted "monitoring system" in the following. The monitoring system 1 is arranged to monitor a scene 5. In the illustrated example, three individuals 10 are in the scene 5. The system 1 comprises a plurality of cameras 2 which are oriented with their respective field of view 20 towards the scene 5. The scene 5 is associated with a fixed 3D coordinate system 30 ("scene coordinate system"). The cameras 2 may be fixed or moveable. When the system 1 has been calibrated, the positions and orientations of the cameras 2 in relation to each other are known for each image taken. The cameras 2 may be synchronized to capture a respective image at approximately the same time, or at least with a maximum time difference (TD_MAX) which depends on the expected maximum speed of movement of the objects 10. In one example, a TD_MAX of 0.1-0.5 seconds may provide sufficient accuracy for normal human motion. Depending on implementation, images taken by different cameras at approximately the same time may be assigned a different time stamps or a common time stamp. The cameras 2 are oriented with overlapping fields of view 20 and thus produce at least partly overlapping images of the scene 5. The respective camera 2 generates a stream of images, which represents the movement of the individuals 10 within the field of view over time.

The images captured by the respective camera 2 are received by a detection device 3, which is configured to determine keypoints of one or more objects in the respective image. The detection device 3 may implement any conventional object detection technique for identifying objects of a generic or specific type in the respective image and may implement any conventional feature detection technique for identifying one or more keypoints of the respective object, for example as described hereinabove. The detection device 3 may also pre-process the incoming images, for example for noise reduction, contrast enhancement, etc. In an alternative configuration, the monitoring system 1 comprises a plurality of detection devices 3, for example one for each camera 2, where the detection devices 3 may be co-located or integrated with the cameras 2.

The detection device 3 produces object detection data, which identifies a plurality of keypoints of each object that is detected in images taken at approximately the same time. The object detection data is denoted ODD in the following. An example of the ODD is shown in FIG. 1B. Although FIG. 1B illustrates a table, the ODD may be given in any format. In the illustrated example, the ODD represents each camera (view) by a respective view identifier (1-3 in FIG. 1B) and each object by a respective object identifier (1-3 in FIG. 1B), and comprises a keypoint position for each keypoint detected for the respective object (L1-L14 in FIG. 1B). An example of keypoints K1-K14 that may be detected for a human individual is shown in FIG. 1C. However, any number of keypoints may be detected depending on implementation. One or more of the keypoints may be designated as a main keypoint. The main keypoint may be identifiable with greater accuracy than other key points and/or may have a specific location within the object, for example close to its center. In the schematic example of FIG. 1C, the main keypoint K1 is indicated by an open circle and corresponds to the neck of the respective individual.

The detection device 3 is configured to detect a predefined number of keypoints of the respective object. The detected keypoints for the respective object represents the 2D pose of the object.

If a keypoint is not detected, the detection device 3 may enter a predefined value (for example, a null value) into the ODD. The detection device 3 may also include a confidence score for each object and/or keypoint in the ODD, the confidence score representing a level of certainty for the respective detection. FIG. 1D shows an example image captured by one of the cameras 2 in FIG. 1A and represents three detected objects O1, O2 and O3 with associated keypoints. The detected position of the respective keypoint is given by 2D coordinates in a local and fixed coordinate system 32 of the view V.

The system 1 further comprises a monitoring device 4, which is configured to operate on the 2D poses in the ODD for each time step, to compute and track over time the 3D pose of the respective object 10 in the scene 5. The 3D pose is given by 3D positions of the keypoints in the scene coordinate system 30. These 3D positions are denoted "scene points" in the following.

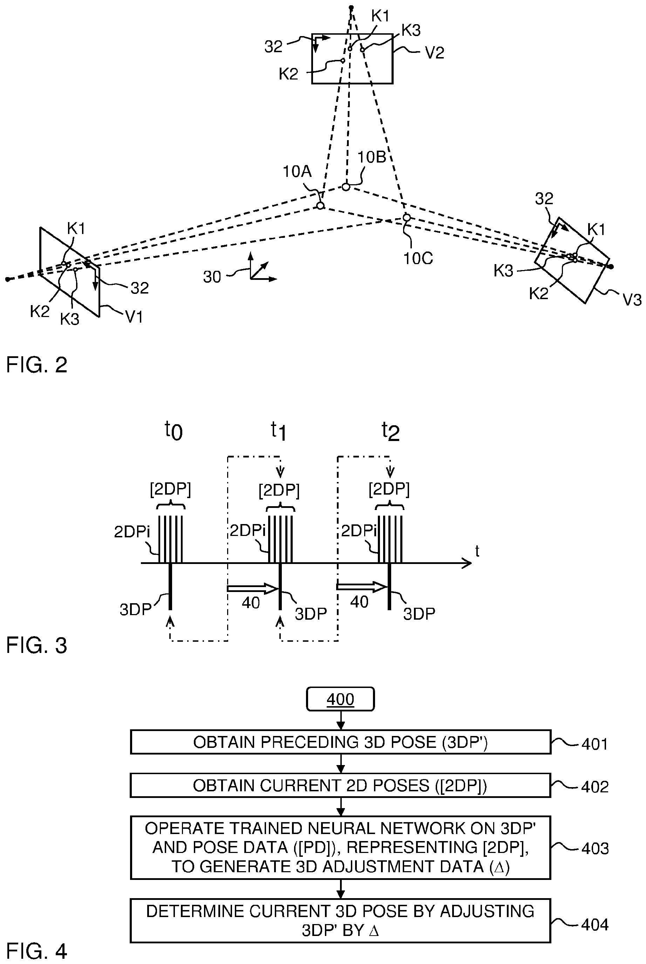

Conventionally, the monitoring device 4 is configured to determine the 3D pose by triangulation. FIG. 2 shows an example of triangulation of scene points 10A-10C in the scene coordinate system 30 based on the locations of keypoints K1-K3 in relation to the respective local coordinate system 32 in views V1, V2, V3 of three cameras. The scene points 10A-10C are computed by identifying intersections of rays that extend from camera centers through the respective keypoint K1-K3 in the views V1, V2, V3. The triangulation may be implemented to also to account for observation errors in the keypoint locations and may operate on keypoints from any number of views. There are numerous available triangulation methods that may be implemented by the monitoring device 4, including but not limited to so-called linear methods, optimal methods or branch-and-bound search methods. Generally, the triangulation operates on calibration data that represents the positions, orientations and intrinsic parameters of the cameras. The calibration data may be obtained in a conventional calibration operation, for example when the system 1 is set up or intermittently during operation.

Some shortcomings of using triangulation for 3D pose determination are described in the Background section, including a sensitivity to observation errors in the 2D poses. The present disclosure aims to improve the robustness of the 3D pose determination to such observation errors.

FIG. 3 is a schematic representation of 2D poses of one object at three consecutive time steps, t₀-t₂. The ensemble of 2D poses at each time step is designated by [2DP] and are determined in image data from a multi-camera system. The respective 2D pose may be determined as described for FIGS 1A-1D. The 2D poses in [2DP] represent the object effectively concurrently, or at least within TD_MAX (above). Individual 2D poses are shown as vertical lines and designated by 2DPi. In the example of FIG. 3, [2DP] includes five 2D poses at each time step. Thus, the multi-camera system includes at least five cameras in this example. At each time step, there is a 3D pose that corresponds to [2DP], designated 3DP in FIG. 3. The task is to determine the time sequence of 3D poses based on the time sequence of [2DP].

Generally, images are taken by the respective camera at such a time interval to enable the movement of the object to be tracked between the time steps. Thereby, [2DP] at time step ti should be correlated with 3DP at time step t0. The present disclosure is based on the insight that it may be possible to infer 3DP at time step ti by comparing [2DP] at time step ti to 3DP at time step t₀. In FIG. 3, the comparison is indicated by a double-ended (dot-dashed) arrow, and the inference in represented by a block arrow 40. The procedure may then be repeated for consecutive time steps, as shown in FIG. 3, to generate a time sequence of 3D poses. The technique in FIG. 3 may be performed whenever at least one 3D pose has been determined by another technique, for example by conventional triangulation processing (cf. FIG. 2). The present Applicant has found that a properly trained neural network is capable of performing the inference 40. The use of a trained neural network for the inference 40 will limit the impact of observation errors, if the neural network has been trained on input data that contains noise and other observation errors. Further, the impact of observation errors may be reduced since a preceding 3D pose is used as a reference for determining a current 3D pose and since the 2D poses of the current time ([2DP]) are collectively applied in the inference 40 to determine the current 3D pose. Of course, the reduced impact of observation errors presumes that the first 3D pose, from which the sequence of inferences 40 is started (time step t₀ in FIG. 3), has been determined with sufficient accuracy. The use of a trained neural network for the inference 40 also enables a small computational footprint, for example compared to conventional triangulation processing.

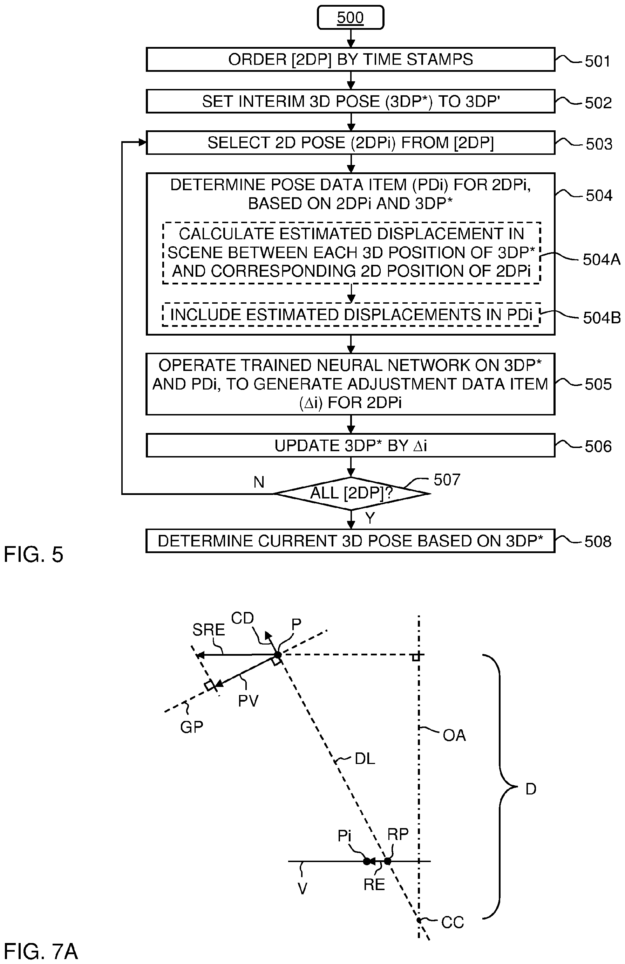

FIG. 4 is a flow chart of an example method 400 for determination of the 3D pose of an object. The method 400 involves the inference 40 of FIG. 3 and may be implemented by a machine for digital processing, such as a computer. The illustrated method 400 determines the 3D pose at a single time step, denoted "current time". In step 401, a 3D pose for the object at a preceding time is obtained. In the following, such a preceding 3D pose is designated by 3DP'. As understood from the foregoing, the preceding 3D pose comprises a plurality of scene points for the object. Each scene point is a 3D position in the scene coordinate system (cf. 30 in FIG. 1A). In step 402, an ensemble of 2D poses for the object at the current time is obtained. Each such current 2D pose represents a respective view of the scene and comprises a plurality of 2D positions for the object in a camera coordinate system (cf. 32 in FIG. 1D). The ensemble of 2D poses corresponds to [2DP] in FIG. 3. In some embodiments, step 402 also involves normalization processing of the 2D poses, as is known in the art. For example, the 2D poses may be normalized by the intrinsic parameters of the respective camera. In step 403, a trained neural network is operated on 3DP' from step 401 and pose data that represents [2DP] from step 402. The pose data is designated by [PD] herein. In some embodiments, [PD] is identical to [2DP]. However, in other embodiments, [PD] comprises values of one or more characteristic parameters of each 2DPi in [2DP]. Examples of such characteristic parameters are given further below with reference to FIGS 5-7. As a result of step 403, the trained neural network generates 3D adjustment data, designated by Δ herein. The 3D adjustment data defines how the preceding 3D pose should be adjusted to get the current 3D pose. In some embodiments, the 3D adjustment data comprises a 3D adjustment vector in the scene coordinate system for each scene point in the preceding 3D pose. In step 404, the current 3D pose is determined by adjusting the preceding 3D pose by the 3D adjustment data. Thus, step 404 causes each scene point in the preceding 3D pose to be shifted in 3D space by an amount given by the 3D adjustment data. It is realized that the shift may be zero or non-zero for the respective scene point, depending on how the object moves in the scene between the preceding time and the current time. Steps 403-404 correspond to the inference 40 in FIG. 3. Depending on implementation, step 404 may be performed by the trained neural network, or by separate processing downstream of the trained neural network.

The method 400 may be repeated to produce a time sequence of 3D poses. In each repetition of the method 400, the current 3D pose in step 401 is given by the 3D pose that was produced by step 404 in the preceding repetition of the method 400. Thus, in the example of FIG. 3, the current 3D pose determined at time step ti is used for determining the current 3D pose at time step t₂, and so on.

It is conceivable that the trained neural network is operated on more than one preceding 3D pose to yield the 3D adjustment data. Thus, the neural network may be trained to produce the 3D adjustment data based on a time sequence of preceding 3D poses. Here, the 3D adjustment data may define how the latest (most recent) preceding 3D pose should be adjusted to get the current 3D pose. Such an extension of the proposed technique is trivial for the skilled person to implement and will not be described in further detail.

The method 400 is performed for a single object. If there are more than one object in the scene, for example as shown in FIG. 1A, the method 400 may be performed for each object separately. As understood from the ODD in FIG. 1B, the system may be configured to identify the 2D poses of all objects in all views at a given time step. There are well-established techniques to match 2D poses between images at consecutive time steps to determine correspondence between 2D poses over time and thereby track individual objects across a time sequence of images. Thus, ODDs generated over time may be processed to track the 2D pose of each object over time.

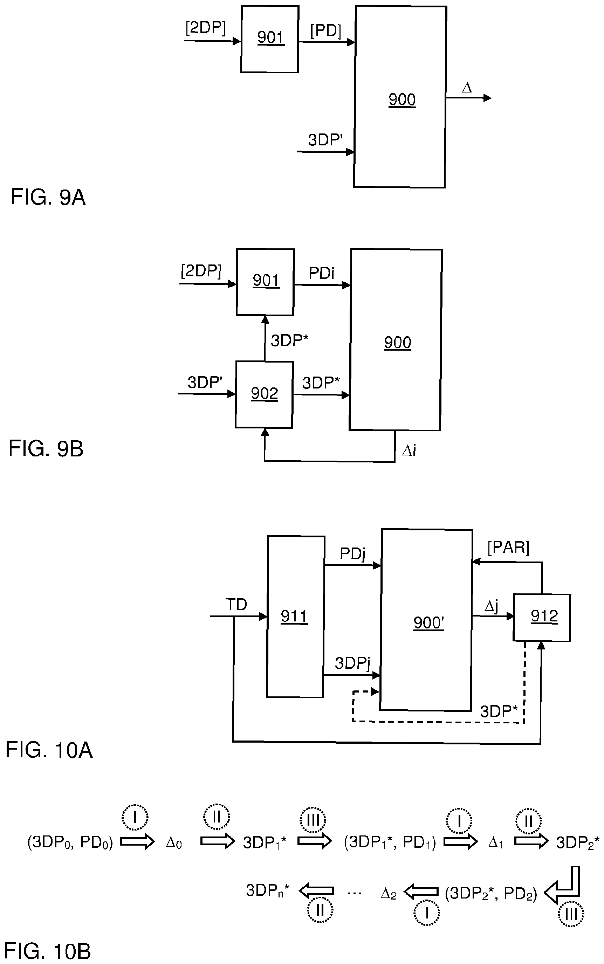

In some embodiments, the neural network is configured for batch processing of the pose data for all of the current 2D poses, [2DP]. An example of a corresponding calculation structure is shown in FIG. 9A. The calculation structure comprises a trained neural network 900 and a data extraction unit 901. The data extraction unit 901 is configured to receive an ensemble of 2D poses, [2DP], for a current time and generate pose data, [PD], for all of the 2D poses in [2DP]. The neural network 900 is configured (trained) to determine 3D adjustment data, Δ, based on a 3D pose and pose data for a plurality of 2D poses. Hence, in the example of FIG. 9A, the input data to the neural network 900 comprises 3DP' and [PD]. One technical benefit of batch processing is a robustness to noise in the image data. Specifically, the batch processing may be configured to jointly take into account pose data from multiple views when determining the 3D adjustment data and thereby be capable of handling relatively noisy image data. One drawback of batch processing is that the number of 2D poses in [2DP] may vary over time. For example, the object may be occluded in some views at some time steps, resulting in fewer 2D poses at these time steps. Thus, the neural network needs to be configured to handle varying sizes of the input data. This may increase the complexity of the neural network. Batch processing is believed to make the design and training of the neutral network, as well as the inference during deployment, more complicated. Even if batch processing is a viable embodiment, there is a need for an alternative embodiment with a different tradeoff of complexity versus output quality.

To provide such an alternative embodiment, it is proposed to configure the neural network to separately process pose data items for individual 2D poses, and use the neural network to sequentially process all pose data items for the 2D poses in [2DP], so as to obtain the 3D adjustment data, Δ. FIG. 5 is a flow chart of an example procedure 500 that involves such sequential processing of pose data items. The procedure 500 corresponds to steps 403-404 in FIG. 4.

In step 501, the 2D poses in [2DP] are ordered by time stamp. Here, it is assumed that the time stamp indicates when the originating image was taken by the respective camera. The time stamp may be given in any unit. As noted with reference to FIG. 3, the images of different cameras may be taken at slightly different time points. By step 501, the 2D poses in [2DP] are placed in an ordered sequence in time. Assuming that the time stamps increase with time, the 2D poses may be ordered with increasing time stamp. Thus, the ordered sequence is headed by the oldest 2D pose and ended with most recent 2D pose, among the 2D poses obtained by step 401 (FIG. 4). Step 501 is optional but has been found to improve the outcome of the method 500.

In step 502, an evolving variable is defined. The evolving variable represents an interim 3D pose and is designated by 3DP* herein. In step 502, 3DP* is set to the preceding 3D pose, 3DP', from step 402 (FIG. 4).

In step 503, a 2D pose (2DPi) is selected from [2DP] as re-ordered by step 501 (if performed).

In step 504, a pose data item (PDi) is determined for the selected 2D pose, 2DPi. The pose data item is determined to represent one or more characteristic parameters of the selected 2D pose. The purpose of step 504 is to improve the quality or relevance of the input data to the neural network, to thereby improve the quality of the output from the neural network and/or reduce the complexity of the neural network. Step 504 may also reduce the amount of input data, by producing PDi to be smaller in size than 2DPi. In the illustrated example, PDi is determined as a function of 2DPi and 3DP*. This has been found to be advantageous when pose data items are sequentially processed by the neural network, as in the method 500. Specifically, in step 504, PDi is determined by comparing the locations of keypoints in 2DPi to the locations of these keypoints in 3DP*, for the purpose of determining how the location of each keypoint in 3DP* should be displaced in the scene to match the location of the corresponding keypoint in 2DPi. This is further illustrated by steps 504A-504B in FIG. 5. In step 504A, an estimated displacement in the scene is determined, between a respective scene point in 3DP* and the corresponding keypoint in 2DPi. In step 504B, the estimated displacements for the scene points in 3DP* are included in PDi for 2DPi.

In step 505, the trained neural network is operated on 3DP* and PDi from step 504, to generate an adjustment data item for 2DPi. The adjustment data item is designated by Δi and may be seen as a refinement of the estimated displacements that were included in PDi by step 504. The adjustment data item, Δi, may define how, according to the trained neural network, 3DP* should be adjusted to match 2DPi.

In step 506, 3DP* is updated by the adjustment data item, Δi. Thereby, 3DP* is redefined to include the adjustment that was determined by the neural network in step 505. In some embodiments, the adjustment data item from step 505 comprises a 3D adjustment vector in the scene coordinate system for each scene point in 3DP*, and step 506 involves combining the 3D position of the respective scene point in 3DP* and the 3D adjustment vector for the respective scene point, for example by conventional vector addition, to attain a new 3D position of the respective scene point. Then, the 3D positions in 3DP* are replaced by the new 3D positions.

Steps 503-506 define a processing operation that is repeated until all 2D poses in [2DP] have been processed, as determined by step 507. As the processing operation is repeated, 3DP* will be stepwise adjusted to the 2D poses in [2DP]. It is realized that the time-ordering by step 501 may be beneficial for such a stepwise adjustment.

When all 2D poses in [2DP] have been processed, the method 500 proceeds to step 508, in which the current 3D pose is determined based on the last 3DP*, i.e., the 3DP* that is generated by step 506 in the final repetition of the processing operation. The current 3D pose may be set to 3DP*, or 3DP* may be subject to post-processing to yield the current 3D pose.

Referring back to FIG. 4, it is realized that the method 500 implements steps 403-404. Through the sequential processing, the trained neural network is operated on pose data for all 2D poses in the ensemble of 2D poses at the current time ([2DP]), and on the 3D pose at the preceding time (3DP') to generate 3D adjustment data, which is applied to adjust 3DP' into a 3D pose at the current time. However, in contrast to batch processing, the 3D adjustment data is determined and applied in piecewise manner, through the adjustment data items, Δi.

In the example of FIG. 5, pose data items (PDi) are determined sequentially, one pose data item for each repetition of the processing operation, by relating a respective 2DPi to the latest 3DP*. Thereby, on a level of abstraction, the method 500 determines pose data ([PD]) that comprises an ordered sequence of pose data items (PDi), where each pose data item corresponds to a respective 2D pose in [2DP]. By step 501, it is ensured that the pose data items are ordered by time stamp, before they are supplied to and processed by the trained neural network in the desired order. It is currently believed that the approach of iteratively generating pose data items based on the repeatedly updated 3DP*, as exemplified in FIG. 5, provides distinct advantages in terms of the accuracy of the end result of sequential processing. That said, in alternative implementations, the pose data items may be pre-generated before the method 500 is initiated. In such alternative implementations, the method 500 will be modified. For example, step 501 (if included) may be modified to order the pre-generated pose data items by the time stamps of the corresponding 2D poses. Step 503 may be modified to select a pose data item from the thus-ordered sequence of pose data items, and step 504 may be omitted.

FIG. 9B is a block diagram of a calculation structure that may implement the method 500. The calculation structure comprises a trained neural network 900, a data extraction unit 901 and an updating unit 902. The data extraction unit 901 is configured to receive an ensemble of 2D poses, [2DP], for a current time and supply a pose data item (PDi) for a selected 2D pose in [2DP] to the neural network 900. The neural network 900 is configured (trained) to determine an adjustment data item, Δi, based on input data that comprises a pose data item and a 3D pose. In the illustrated example, the data extraction unit 901 receives the latest 3DP* from the updating unit 902 and generates PDi in accordance with step 504. The updating unit 902 is configured to receive the 3D pose for a preceding time (3DP') as well as the latest adjustment item (Δi) that is generated by the neural network 900. The updating unit 902 is further configured to generate and output the interim 3D pose (3DP*) in accordance with step 502 before steps 503-507 are initiated and in accordance with step 506 during execution of steps 503-507. The interim 3D pose (3DP*) is supplied to the neural network 900 and to the updating unit 902.

As noted above, it is conceivable to configure (train) the neural network to operate on a time sequence of preceding 3D poses instead of a single preceding 3D pose.

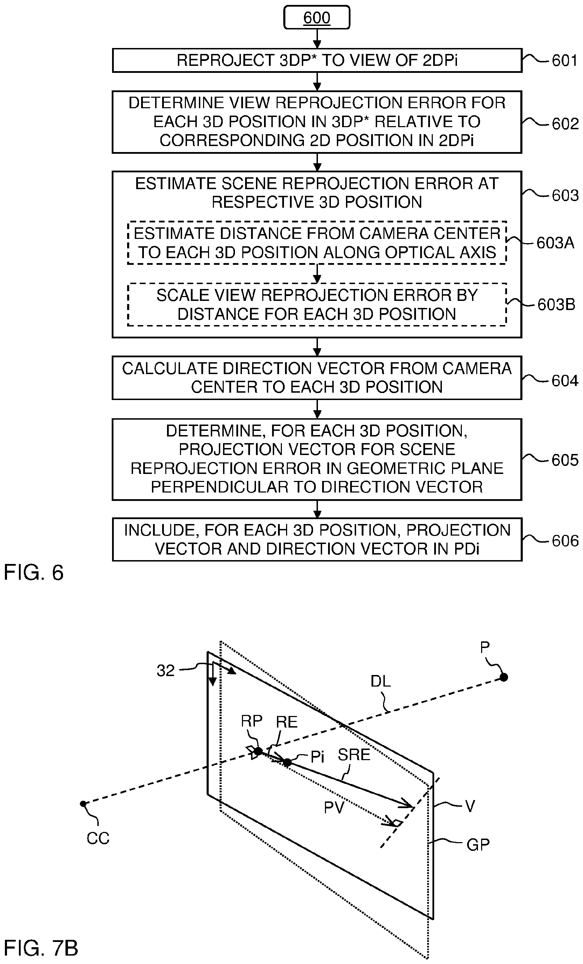

FIG. 6 is a flow chart of an example procedure 600 that may be performed as part of step 504 in FIG. 5 to determine a pose data item (PDi) for a selected 2D pose (2DPi). The procedure 600 assumes that an interim 3D pose (3DP*) is made available (cf. steps 502, 506 in FIG. 5) . In step 601, 3DP* is reprojected onto the view in which 2DPi was detected. Reprojection is a well-known technique and involves projecting each scene point onto the view of a camera, by use of calibration data for the camera. Thus, the reprojection in step 601 results in a reprojected 2D pose given by a plurality of 2D positions. The reprojected positions are typically given in the local coordinate system of the camera (cf. 32 in FIG. 1D).

In step 602, reprojection errors for 3DP* in relation to 2DPi are determined. The reprojection error is a conventional parameter and designates the difference between the reprojected 2D position of a scene point in a view and the position of a corresponding keypoint in the view. Step 602 results in a plurality of reprojection errors that collectively represent a difference between 3DP* and 2DPi in the view of 2DPi. In the context of the present disclosure, these reprojection errors are also denoted "view reprojection errors". Each reprojection error may be associated with a magnitude and a direction in the local coordinate system of the view and may, for example, be given as a vector.

The determination of a reprojection error is schematically illustrated in the top plan view of FIG. 7A, in which 3DP* is represented by a single scene point P. In FIG. 7A, V is the view (image plane) of a camera, CC is the camera center of the camera, and OA is the optical axis of the camera. The reprojection of the scene point P onto the view V gives a reprojected point RP. The corresponding keypoint in the view V has position Pi, resulting in reprojection error RE.

In step 603, the view reprojection errors from step 602 are processed to determine estimated reprojection errors at the location of 3DP* in the scene. These estimated reprojection errors are also denoted "scene reprojection errors" or SRE herein. Step 603 may involve a rescaling of the respective view reprojection error. In some embodiments, the rescaling is based on an estimated distance between the camera and 3DP*. The distance may be determined in many different ways and may be a single overall distance or a respective distance for each keypoint. An example embodiment comprises steps 603A-603B in FIG. 6 and will be described with reference to FIG. 7A. In step 603A, the distance D from the camera center CC to the respective scene point in 3DP* (here, P) along the optical axis OA is estimated. As understood by the skilled person, such an estimation may be made by straight-forward calculations based on 3DP* and calibration data for the camera. The skilled person also realizes that the distance D provides a good scaling factor to scale a magnitude in the view into a magnitude at the detected object in the scene. In step 603B, the view reprojection error from step 602 is scaled by the distance D from step 603A, for example proportionally. In the context of FIG. 7A, step 603B is visualized to result in SRE, which may be given as a vector in the local coordinate system.

In step 604, a direction vector from the camera center to the respective scene point is determined. Again, the skilled person understands that this determination may be made by straight-forward calculations based on 3DP* and calibration data for the camera. Thus, step 604 results in a plurality of direction vectors. In the context of FIG. 7A, step 604 results in direction vector CD for scene point P. The direction vector CD extends along a direction line DL from the camera center CC to the scene point P. The vector CD may be a unit vector.

In step 605, a projection vector for SRE from step 603 is determined in a geometric plane that is perpendicular to the direction vector from step 604. Thus, step 605 results in a plurality of projection vectors. FIG. 7A shows the geometric plane GP, which is defined to be perpendicular to the direction vector CD, and a projection vector PV, which is given by projecting SRE onto GP. The projection error PV may be calculated by conventional vector algebra.

In step 606, the projection vectors PV from step 605 and the direction vectors CD from step 604 are included in the pose data item (PDi) for 2DPi. It is understood that the pose data item is structured so that each pair of PV and CD is associated with a specific keypoint in 2DPi. The vectors PV, CD may be given in any suitable coordinate system, for example the local coordinate system or the scene coordinate system.

FIG. 7B shows an example in which PV is determined in the local coordinate system 32 of a view V. The view reprojection error RE is determined as a vector in the view V, by reprojecting the scene point P to the reprojected point RP. The scene reprojection error SRE is determined by re-scaling RE, and the projection vector PV is determined by projecting SRE onto the geometric plane GP (dotted lines), which is defined to be perpendicular to the direction line DL from the camera center CC to the scene point P. It is realized that CD may also be determined in the local coordinate system 32, to coincide with DL.

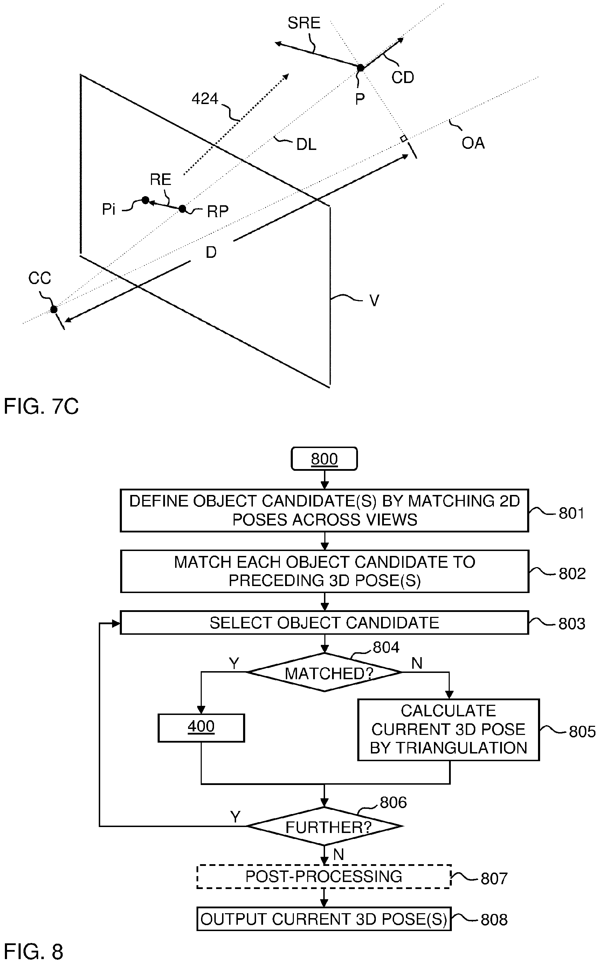

The calculations to determine RE, SRE, D, and CD are further exemplified in FIG. 7C. The scene point P is reprojected to a reprojected point RP in the view V, and RE is determined to extend between RP and the location Pi of the corresponding keypoint in the view. By step 603, as indicated by a dotted arrow, RE is re-scaled into SRE based on the distance D, which is given as the distance from the camera center CC to the scene point P along the optical axis OA. Further, the direction vector CD is determined to extend along the direction line DL between the camera center CC and the scene point P.

By the procedure 600, the pose data item (PDi) is determined to represent 2DPi by an ensemble of projection vectors PV and direction vectors CD. Such PDi has been found to enable a robust and precise determination of the current 3D pose by a trained neural network.

However, the proposed technique is not limited to the pose data items that are generated by the procedure 600. Many alternatives are possible. In one alternative, the respective pose data item comprises the view reprojection errors RE, the scene projection errors SRE, or another similar or equivalent parameter. In some alternatives, the distance(s) D may be included in the pose data item. In yet another alternative, the respective pose data item includes 2DPi, or part thereof.

Some possible embodiments related to the calculation of the pose data items are discussed below. These embodiments are integrated in the procedure 600 but are believed to be beneficial on their own merit for the performance of the trained neural network.

In one embodiment, the estimated displacement in step 504A is given in a geometric plane (cf. GP) that is perpendicular to a direction from the camera center to the respective scene point (cf. CD). This provides a more accurate measure of the true displacement.

In one embodiment, the estimated displacement comprises a vector in the geometric plane.

In one embodiment, the direction (cf. CD) is included in PDi for 2DPi.

In one embodiment, the estimated displacement is calculated by calculating a reprojection error (cf. RE) for the respective scene point in the view in relation to a corresponding 2D position in 2DPi, and by determining the estimated displacement based on the reprojection error.

In one embodiment, the estimated displacement is calculated by estimating a distance from the camera center to the respective scene point, and by determining the estimated displacement based on the reprojection error and the distance.

In one embodiment, the distance is given along an optical axis associated with the view.

In one embodiment, the estimated displacement is calculated by scaling the reprojection error by the distance to generate a re-scaled reprojection error (cf. SRE), and by determining the estimated displacement based on the re-scaled reprojection error.

In one embodiment, the estimated displacement is calculated by projecting the re-scaled reprojection error to the geometric plane (cf. GP) to generate a projection vector (cf. PV), and including the projection vector in PDi for 2DPi.

The foregoing embodiments for calculation of pose data items are not only applicable to sequential processing in accordance with the procedure 500, but are equally applicable to calculate pose data items to be included in pose data [PV] for use in batch processing, for example as shown in FIG. 9A.

FIG. 8 is a flow chart of an example method 800 for determining and tracking the 3D poses of objects. The method 800 may be performed by the monitoring device 4 in FIG. 1A. The method 800 comprises steps 801-808, which are repeated at consecutive time steps. In the following, it is assumed that the monitoring device 4 operates on object detection data, ODD, from the detection device 3. As explained with reference to FIG. 1B, the ODD defines all 2D poses that have been detected in the different views of the cameras at a current time step.

In step 801, object candidates are defined by matching the 2D poses in the ODD across the views. Each object candidate associates 2D poses between two or more views and is thus deemed likely to correspond to one and the same object in the scene. Step 801 is well-known in the art and is sometimes referred to as point matching. There are numerous available point matching algorithms, including but not limited to tree-pruning methods, generalized Hough transform, geometric hashing, alignment methods, probabilistic methods, eigenvector-based approaches, relaxation labeling algorithms, deformable object modeling, etc.

In step 802, each of the object candidates from step 801 is matched to one or more preceding 3D poses, which thus have been determined at a preceding time step. In other words, the preceding 3D poses represent the objects that were detected/tracked at the preceding time step. The matching in step 802 is also well-known in the art and may be performed by any available technique. In a non-limiting example, a total reprojection error is calculated between each preceding 3D pose and the 2D poses of the respective object candidate, and a match is detected when the total reprojection error is below a threshold value.

In step 803, one of the object candidates from step 801 is selected for processing. If a match was found by step 802 between the selected object candidate and a preceding 3D pose, the method 400 is operated on the preceding 3D pose and the 2D poses of the selected object candidate, to determine a current 3D pose. In no match was found by step 802, this may imply that a new object has emerged on the scene. The method 800 therefore proceeds to step 805, in which the current 3D pose is calculated by conventional triangulation based on the 2D poses of the selected object candidate, for example as described with reference to FIG. 2. If there are further object candidates to be processed, step 806 returns to step 803, in which another object candidate is selected. If all candidate objects have been processed, step 806 proceeds to step 808, in which a result list of the current 3D poses is output and/or stored, optionally after post-processing in step 807. The 3D poses in the result list will then be input as preceding 3D poses for the repetition of steps 801-808 at the next time step. The post-processing in step 807 may involve determining how to handle objects that seem to have disappeared from the scene. Such objects are identified when there is a preceding 3D pose without any matching candidate object when all candidate objects have been processed by steps 803-806. In some embodiments, to reduce the impact of occlusions, step 807 may keep the unmatched 3D pose as a preceding 3D pose for use by step 802 at the next time step or even for a number of subsequent time steps. The unmatched 3D pose may or may not be included in the result list generated by step 808.

Many different types of neural networks may be used within the context of the present disclosure. Some non-limiting example of network types for the neural network that is used in step 403 and/or step 505 include multilayer perceptron (MLP), residual network, graph convolution network (GCN), transformer, or any combination or fusion thereof. The fusion may be a simple version where two networks are run on the same input in parallel and the outputs are averaged, or a deeper fusion where additional layers are added between the intermediate layers of the parallel networks.

The neural network may be trained in conventional manner, by use of suitable training data. In the example of a neural network for sequential processing (FIG. 9B), the training data may comprise pairs of a pose data item and a 3D pose, as well as a desired result for each pair. For example, the desired result may be given as an adjustment data item or a 3D pose. As is well-known in the art, training of a neural network involves determining values of control parameters of the neural network to generate desired output data based on input data. Such control parameters may comprise weights and/or biases within the neural network. An example of a system for training a neural network 900' is shown in FIG. 10A. The system comprises a first device 911, which is configured to receive training data TD and supply pairs of pose data items (PDj) and 3D poses (3DPj) to the neural network 900'. The system comprises a second device 912, which is arranged to receive the resulting adjustment data items (Δj) from the neural network 900', and reference data that is included in the training data TD and represents the desired output for the respective pair (PDj,3DPj). The second device 912 is configured to update the control parameters ([PAR]) of the neural network 900' to minimize a difference between the resulting adjustment data items (Δj) and the reference data. The second device 912 may implement any conventional updating function, for example backpropagation, by use of any suitable loss function, including but not limited to a simple loss function such as mean squared error (L2 loss), L1 loss, Huber loss, or variants or derivatives thereof. In another example, the loss function is formed by decomposing 3D poses (ground truth and predicted) into a global component and a local component, applying a simple loss function separately to the global component and the local component, and then do a weighted combination to yield a composite loss. The global component may be an average position of all joints or just simply the position of a designated reference joint. The local component may be calculated by subtracting the global component from the positions of all joints. The backpropagation may include any suitable stochastic or non-stochastic optimization algorithm, including but not limited to gradient descent, nonlinear conjugate gradient, limited-memory BFGS, Levenberg-Marquardt algorithm, etc.

Although not shown in FIG. 10A, the system may also be configured to perform augmentation of the training data. Data augmentation is a well-known concept in the field of neural networks and involves imparting selected modifications to the input data for the neural network during training to improve the ability of the neural network, when trained, to handle variations in the input data.

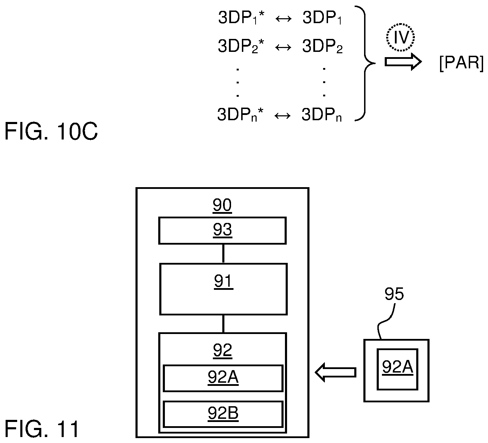

If the neural network is used for tracking 3D poses over time, for example as described hereinabove, it may be desirable to train the neural network on coherent time sequences of 3D poses instead of, or in addition to, individual 3D poses. In a coherent time sequence, the 3D poses represent the movement of an object in a scene. This type of training is denoted "autoregressive training" in the following. To implement the autoregressive training, the second device 912 is configured to calculate and supply interim 3D poses (3DP*) as input to the neural network, as indicated by a dashed arrow in FIG. 10A. FIG. 10B shows an example of operations that are repeatedly performed in the system during autoregressive training. The respective operation is designated by a block arrow and a Roman numeral in a dashed circle. The training data includes a coherent time sequence of 3D poses, 3DP₀-3DPₙ, and associated pose data items, PD₀-PDₙ, with n ≥ 1. In one example, n is in the range 2-10. In operation I, the neural network 900' is supplied with the pair (3DP₀,PD₀) and outputs Δ₀. In operation II, the second device 912 generates an interim 3D pose, 3DP₁*, by adding Δ₁ to 3DP₀, by analogy with the updating step 506 in FIG. 5. In operation III, the second device 912 forms the pair (3DP₁*,PD₁). Then, operations I and II are performed again, for the pair (3DP₁*,PD₁), resulting in another interim 3D pose, 3DP₂*. As understood from FIG. 10B, the operations I-III are repeated until 3DPₙ* is obtained. Then, as shown in FIG. 10C, the second device 912 performs operation IV to update the control parameters [PAR] of the neural network 900' to minimize a difference between the interim 3D poses, 3DP₁*-3DPₙ*, and 3DP₁-3DPₙ in the training data. This autoregressive training will cause the trained neural network to produce output data that accounts for a temporal coherence between consecutive 3D poses. Another advantage of the autoregressive training is that the neural network is trained not only on 3D poses from the training data but also on the interim 3D poses that are produced by the neural network itself. This may help the trained neural network to recover from individual bad predictions, since bad predictions are also likely to occur during the autoregressive training. When a bad prediction occurs during training, the neural network will learn in the next autoregressive step to recover from the bad prediction. Thereby, the autoregressive training improves the ability of the trained neural network to recover from bad predictions that may occur during inference.

The structures and methods disclosed herein may be implemented by hardware or a combination of software and hardware. In some embodiments, such hardware comprises one or more software-controlled computer resources. FIG. 11 schematically depicts such a computer resource 90, which comprises processor circuitry 91 and computer memory 92 that define logic for controlling the operation of the computer resource 90. The computer resource 90 further comprises an interface 93 for input and/or output of data. The interface 93 may be configured for wired and/or wireless communication, for example to communicate with the detection device 3 and/or the cameras 2 in FIG. 1A. Alternatively or additionally, the interface 93 may be configured to receive user input, for example via a user interface. The processor circuitry 91 may, for example, include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program 92A comprising computer instructions is stored in the memory 92 and executed by the processor circuitry 91 to perform any of the methods, operations, procedures, functions, or steps described herein. As indicated in FIG. 11, the memory 92 may also store control data 92B for use by the processor circuitry 91, for example various predefined values such as thresholds, definition data for the neural network 900, etc. The control program 92A may be supplied to the computer resource 90 on a computer-readable medium 95, which may be a tangible (non-transitory) product (e.g. magnetic medium, optical disk, read-only memory, flash memory, etc.) or a propagating signal.

The techniques disclosed and exemplified herein have a variety of applications such as 3D vision inspection, product assembly, goods inspection, human-computer interaction, video surveillance, sports broadcasting, industry robot control, navigation, etc.

In the following, clauses are recited to summarize some aspects and embodiments as disclosed in the foregoing.

C1. A computer-implemented method of determining a current three-dimensional, 3D, pose of an object (10) in a scene (5), said method comprising:
obtaining (401) a 3D pose (3PD') for the object at a preceding time, said 3D pose comprising a plurality of 3D positions for the object (10) in a scene coordinate system (30); obtaining (402) a plurality of two-dimensional, 2D, poses for the object (10) at a current time, wherein a respective 2D pose (2DPi) among the plurality of 2D poses represents a respective view (V) of the scene (5) and comprises a plurality of 2D positions for the object (10) in a camera coordinate system (32); operating (403) a trained neural network (900) on the 3D pose (3DP') and pose data ([PD]) representative of the plurality of 2D poses to generate 3D adjustment data (Δ); and determining (404) the current 3D pose of the current time by adjusting the 3D pose (3DP') by the 3D adjustment data (Δ).

C2. The method of C1, wherein the 3D adjustment data comprises a 3D adjustment vector in the scene coordinate system (30) for each of the plurality of 3D positions.

C3. The method of C1, wherein the pose data ([PD]) comprises an ordered sequence of pose data items (PDi) corresponding to the plurality of 2D poses, and wherein said operating (403) the trained neural network on the 3D pose and the pose data comprises: setting (502) an interim 3D pose (3DP*) to the 3D pose (3DP') and repeatedly performing a processing operation comprising: operating (505) the trained neural network (900) to process the interim 3D pose (3DP*) and a respective pose data item (PDi) from the ordered sequence of pose data items for generation of an adjustment data item (Δi) of said 3D adjustment data (Δ), and updating (506) the interim 3D pose (3DP*) by the adjustment data item (Δi), wherein the current 3D pose is determined based on the interim 3D pose (3DP*) after a final repetition of the processing operation.

C4. The method of C3, wherein the respective pose data item (PDi) is associated with a time stamp of a corresponding 2D pose (2DPi), and wherein a location of the respective pose data item (PDi) in the ordered sequence is based on the time stamp of the corresponding 2D pose (2DPi).

C5. The method of C4, wherein the pose data items (PDi) are ordered by increasing time stamp in the ordered sequence.

C6. The method of any one of C3-C5, wherein the respective adjustment data item (Δi) comprises a 3D adjustment vector in the scene coordinate system (30) for each of the plurality of 3D positions of the interim 3D pose (3DP*), and wherein updating the interim 3D pose (3DP*) by the adjustment data item (Δi) comprises combining a respective 3D position of the interim 3D pose (3DP*) and the 3D adjustment vector for the respective 3D position.

C7. The method of any one of C3-C6, wherein the trained neural network (900) is configured to determine the respective adjustment data item (Δi) by adjusting the interim 3D pose (3DP*) based on the 2D pose (2DPi) represented by the respective pose data item (PDi).

C8. The method of any one of C3-C7, wherein the processing operation further comprises: determining (504) the respective pose data item (PDi) as a function of the interim 3D pose (3DP*) and a selected 2D pose (2DPi) among the plurality of 2D poses.

C9. The method of C8, wherein said determining (504) the respective pose data item comprises: calculating (504A) an estimated displacement in the scene (5) between a respective 3D position (P) of the interim 3D pose (3DP*) and a corresponding 2D position (Pi) of the selected 2D pose (2DPi), and including (504B) the estimated displacement in the pose data item (PDi) for the selected 2D pose (2DPi).

C10. The method of C9, wherein the estimated displacement is given in a geometric plane (GP) that is perpendicular to a direction (CD) from a camera center (CC), which is associated with a view (V) that includes the selected 2D pose (2DPi), to the respective 3D position (P).

C11. The method of C10, wherein the estimated displacement comprises a vector (PV) in the geometric plane (GP).

C12. The method of C10 or C11, further comprising: including (606) said direction (CD) in the pose data item (PDi) for the selected 2D pose (2DPi).

C13. The method of any one of C10-C12, wherein said calculating (504A) the estimated displacement comprises: calculating (601, 602) a reprojection error (RE) for the respective 3D position (P) in the view (V) in relation to the corresponding 2D position (Pi), and determining (603-605) the estimated displacement based on the reprojection error (RE).

C14. The method of C13, wherein said calculating (504A) the estimated displacement comprises: estimating (603) a distance (D) from the camera center (CC) to the respective 3D position (P), and determining (604-605) the estimated displacement based on the reprojection error (RE) and the distance (D).

C15. The method of C14, wherein the distance (D) is given along an optical axis (OA) associated with the view (V).

C16. The method of C14 or C15, wherein said calculating (504A) the estimated displacement further comprises: scaling (604) the reprojection error (RE) by the distance (D) to generate a re-scaled reprojection error (SRE), and determining (605) the estimated displacement based on the re-scaled reprojection error (SRE).

C17. The method of C16, wherein said calculating (504A) the estimated displacement comprises: projecting the re-scaled reprojection error (SRE) to said geometric plane (GP) to generate a projection vector (PV), and including the projection vector (PV) in the pose data item (PDi) for the selected 2D pose (2DPi).

C18. A computer readable medium comprising instructions which, when executed by processor circuitry, causes the processor circuitry to perform the method of any preceding clause.

C19. An apparatus for determining a current three-dimensional, 3D, pose of an object in a scene, said apparatus comprising: a memory (92) configured to store instructions; and processor circuitry (91) configured to execute the instructions to perform actions, including: obtaining (401) a 3D pose for the object at a preceding time, said 3D pose comprising a plurality of 3D positions for the object in a scene coordinate system; obtaining (402) a plurality of two-dimensional, 2D, poses for the object at a current time, wherein a respective 2D pose among the plurality of 2D poses represents a respective view of the scene and comprises a plurality of 2D positions for the object in a camera coordinate system; operating (403) a trained neural network on the 3D pose and pose data representative of the plurality of 2D poses to generate 3D adjustment data in the scene coordinate system; and determining (404) the current 3D pose of the current time by adjusting the 3D pose by the 3D adjustment data.

## Claims

1. A computer-implemented method of determining a current three-dimensional, 3D, pose of an object (10) in a scene (5), said method comprising:
obtaining (401) a 3D pose (3PD') for the object at a preceding time, said 3D pose comprising a plurality of 3D positions for the object (10) in a scene coordinate system (30),
obtaining (402) a plurality of two-dimensional, 2D, poses for the object (10) at a current time, wherein a respective 2D pose (2DPi) among the plurality of 2D poses represents a respective view (V) of the scene (5) and comprises a plurality of 2D positions for the object (10) in a camera coordinate system (32),
operating (403) a trained neural network (900) on the 3D pose (3DP') and pose data ([PD]) representative of the plurality of 2D poses to generate 3D adjustment data (Δ), and
determining (404) the current 3D pose of the current time by adjusting the 3D pose (3DP') by the 3D adjustment data (Δ).

2. The method of claim 1, wherein the 3D adjustment data comprises a 3D adjustment vector in the scene coordinate system (30) for each of the plurality of 3D positions.

3. The method of claim 1, wherein the pose data ([PD]) comprises an ordered sequence of pose data items (PDi) corresponding to the plurality of 2D poses, and wherein said operating (403) the trained neural network on the 3D pose and the pose data comprises:
setting (502) an interim 3D pose (3DP*) to the 3D pose (3DP'),
repeatedly performing a processing operation comprising:
operating (505) the trained neural network (900) to process the interim 3D pose (3DP*) and a respective pose data item (PDi) from the ordered sequence of pose data items for generation of an adjustment data item (Δi) of said 3D adjustment data (Δ), and
updating (506) the interim 3D pose (3DP*) by the adjustment data item (Δi),
wherein the current 3D pose is determined based on the interim 3D pose (3DP*) after a final repetition of the processing operation.

4. The method of claim 3, wherein the respective pose data item (PDi) is associated with a time stamp of a corresponding 2D pose (2DPi), and wherein a location of the respective pose data item (PDi) in the ordered sequence is based on the time stamp of the corresponding 2D pose (2DPi).

5. The method of claim 3 or 4, wherein the respective adjustment data item (Δi) comprises a 3D adjustment vector in the scene coordinate system (30) for each of the plurality of 3D positions of the interim 3D pose (3DP*), and wherein updating the interim 3D pose (3DP*) by the adjustment data item (Δi) comprises combining a respective 3D position of the interim 3D pose (3DP*) and the 3D adjustment vector for the respective 3D position.

6. The method of any one of claims 3-5, wherein the trained neural network (900) is configured to determine the respective adjustment data item (Δi) by adjusting the interim 3D pose (3DP*) based on the 2D pose (2DPi) represented by the respective pose data item (PDi).

7. The method of any one of claims 3-6, wherein the processing operation further comprises: determining (504) the respective pose data item (PDi) as a function of the interim 3D pose (3DP*) and a selected 2D pose (2DPi) among the plurality of 2D poses.

8. The method of claim 7, wherein said determining (504) the respective pose data item comprises: calculating (504A) an estimated displacement in the scene (5) between a respective 3D position (P) of the interim 3D pose (3DP*) and a corresponding 2D position (Pi) of the selected 2D pose (2DPi), and including (504B) the estimated displacement in the pose data item (PDi) for the selected 2D pose (2DPi).

9. The method of claim 8, wherein the estimated displacement is given in a geometric plane (GP) that is perpendicular to a direction (CD) from a camera center (CC), which is associated with a view (V) that includes the selected 2D pose (2DPi), to the respective 3D position (P).

10. The method of claim 9, further comprising: including (606) said direction (CD) in the pose data item (PDi) for the selected 2D pose (2DPi).

11. The method of claim 9 or 10, wherein said calculating (504A) the estimated displacement comprises: calculating (601, 602) a reprojection error (RE) for the respective 3D position (P) in the view (V) in relation to the corresponding 2D position (Pi), and determining (604-605) the estimated displacement based on the reprojection error (RE).

12. The method of claim 11, wherein said calculating (504A) the estimated displacement comprises: estimating (603) a distance (D) from the camera center (CC) to the respective 3D position (P), and determining (604-605) the estimated displacement based on the reprojection error (RE) and the distance (D).

13. The method of claim 12, wherein said calculating (504A) the estimated displacement further comprises: scaling (604) the reprojection error (RE) by the distance (D) to generate a re-scaled reprojection error (SRE), and determining (605) the estimated displacement based on the re-scaled reprojection error (SRE).

14. A computer readable medium comprising instructions which, when executed by processor circuitry, causes the processor circuitry to perform the method of any preceding claim.

15. An apparatus for determining a current three-dimensional, 3D, pose of an object in a scene, said apparatus comprising:
a memory (92) configured to store instructions; and
processor circuitry (91) configured to execute the instructions to perform actions, including:
obtaining (401) a 3D pose for the object at a preceding time, said 3D pose comprising a plurality of 3D positions for the object in a scene coordinate system;
obtaining (402) a plurality of two-dimensional, 2D, poses for the object at a current time, wherein a respective 2D pose among the plurality of 2D poses represents a respective view of the scene and comprises a plurality of 2D positions for the object in a camera coordinate system;
operating (403) a trained neural network on the 3D pose and pose data representative of the plurality of 2D poses to generate 3D adjustment data in the scene coordinate system; and
determining (404) the current 3D pose of the current time by adjusting the 3D pose by the 3D adjustment data.
